# EUROPÄISCHE PATENTSCHRIFT

(11) **EP 2 734 751 B1**
(45) Veröffentlichungstag und Bekanntmachung des Hinweises auf die Patenterteilung: **23.01.2019**
(21) Anmeldenummer: 12724648.6
(22) Anmeldetag: 31.05.2012
(51) Int. Cl.: F16H 61/24

(54) **VERFAHREN ZUM FÜGEN VON GETRIEBEBAUTEILEN**
METHOD FOR ASSEMBLING GEARBOX COMPONENTS
PROCÉDÉ D'ASSEMBLAGE DE PIÈCES DE TRANSMISSION

(30) Priorität: 22.07.2011 DE 102011079620
(43) Veröffentlichungstag der Anmeldung: 28.05.2014
(73) Patentinhaber: Schaeffler Technologies AG & Co. KG, 91074 Herzogenaurach (DE)
(72) Erfinder: KRÄMER, Klaus, 91438 Lenkersheim (DE); LÖFFELMANN, Jochen, 91330 Eggolsheim (DE)
(86) Internationale Anmeldenummer: PCT/EP2012/060297
(87) Internationale Veröffentlichungsnummer: WO 2013/013868

(56) Entgegenhaltungen:
- EP-A1- 0 852 195
- EP-A1- 1 746 310
- EP-A2- 1 369 620
- WO-A1-2006/041347
- DE-A1-102005 062 170
- FR-A1- 2 866 838
- FR-A1- 2 882 122

## Beschreibung

### Gebiet der Erfindung

Die Erfindung betrifft eine Schwungmasse eines Kraftfahrzeugwechselgetriebes mit einem Koppelmittel zur Anbindung der Schwungmasse an eine Schaltwelle und einem Ausleger mit einer Schaltmasse, welche am radial auskragenden Ende des Auslegers angeordnet ist.

### Hintergrund der Erfindung

Bei Schalteinrichtungen für Getriebe, zum Beispiel für Zahnräderwechselgetriebe, werden oftmals Maßnahmen ergriffen, um den Schalt- oder Wählvorgang mit einer definierten Wähl- oder Schaltkraft zu beaufschlagen. Neben der Beaufschlagung von derartigen, zusätzlichen Kräften ist jedoch auch die Dämpfung von unerwünschten Schwingungen beim Wähl- oder Schaltvorgang ein relevanter Aspekt bei der Auslegung der Schalteinrichtungen.

Die Druckschrift DE 10 2005 062 170 A1 betrifft ein Schaltgewicht für ein Schaltgetriebe mit einer Auslegeeinrichtung und einer mit der Auslegeeinrichtung wenigstens formschlüssig verbundenen Zusatzmasse. In der Druckschrift wird darauf hingewiesen, dass im Stand der Technik derartige Gewichtskörper bislang als einteilige Gussgewichte ausgeführt sind. Die Zusatzmasse sowie der Ausleger, auf dem sie sich befindet, sind also als einteilige Gussteile ausgeführt. In der genannten Druckschrift wird vorgeschlagen, den Gewichtskörper wenigstens zweiteilig auszubilden und damit den einstückigen Gusskörper zu substituieren.

Die Druckschrift EP 1 091 149 B1 betrifft eine Schalthebeldämpferanordnung und insbesondere eine Anordnung, die im Bezug auf einen Gangschalthebel oder Schalthebel in einem Kraftfahrzeug verwendet wird. Es wird eine Hebelanordnung mit einer Brückenkonstruktion vorgeschlagen, die mittig auf einer Schaltwelle aufgesetzt ist und jeweils endseitig ein gummigepuffertes Dämpfungselement trägt, welche auf Bolzen der Brücke aufgesetzt sind.

Aus der DE 10 2009 057 294 A1 ist schließlich ein Schaltgewicht bekannt, das über eine Dämpferhülse aus einem Kunststoff an einen Ausleger angebunden ist. Dieser komplexe Aufbau reduziert die Schwingungen zwar deutlich, aber nicht hinreichend.

Eine weitere Schwungmasse nach dem Oberbegriff des Anspruchs 1 geht aus EP 1 369 620 hervor. Zur Reduzierung der Schwingungsübertragung ist eine PTFE-beschichtete Kunststoffbuchse vorgesehen, die die Schaltwelle umgibt.

### Aufgabe der Erfindung

Der Erfindung liegt die Aufgabe zugrunde, eine Schwungmasse einer Schaltwelle zu schaffen, die leicht ist, ein hohes Trägheitsmoment aufweist und gleichzeitig hohe Momente übertragen kann.

Diese Aufgabe wird durch eine Schwungmasse mit den Merkmalen des Anspruchs 1 gelöst. Die möglichst schwere Schaltmasse ist als ein in der Regel kompaktes Bauteil über den Ausleger, der aus einem leichteren Material bestehen kann, an die Schaltwelle angebunden. Dadurch sinkt zunächst die Gesamtmasse stärker als das Trägheitsmoment, das für die Vergleichmäßigung des Kräfteverlaufs entscheidend ist. Damit kann die Schwungmasse bei gleichem Trägheitsmoment und gleicher Form eine geringere Masse aufweisen oder bei gleicher Masse und Form ein höheres Trägheitsmoment.

Die Schaltmasse ist aus einem Stoff mit möglichst hohem spezifischem Gewicht ausgebildet. Dazu eignen sich beispielsweise Stahllegierungen. Als

Werkstoff für den Ausleger sind beispielsweise Aluminium, Kunststoffe oder andere leichte und zugleich möglichst korrosionsbeständige Werkstoffe vorgesehen. Besonders vorteilhaft ist die Wahl eines dämpfenden Werkstoffs wie Kunststoff, der die Schwingungsamplituden zudem reduziert.

Erfindungsgemäß ist ein Verbindungsteil vorgesehen, das die Kopplung der Schaltmomentübertragung von dem Anlenkmittel auf das Koppelmittel übernimmt. Das Verbindungsteil kann unabhängig von dem Ausleger geformt sein und ermöglicht es, diesen zusätzlichen Freiheitsgrad in der Formgebung des Verbindungsteils zu nutzen, um die Eigenfrequenz der Schwungmasse zu verändern. Die konkrete Formgebung richtet sich nach der Schwungmassenform, die wiederum durch den zur Verfügung stehenden Bauraum getriebespezifisch bestimmt ist.

In einer Variante können das Anlenk- und das Koppelmittel einteilig mit dem Verbindungsteil geformt werden, an dieses nachträglich befestigt werden, oder sie sind als Ausnehmungen realisiert. Das Verbindungsteil ist vorzugsweise eine spanlos hergestellte Blechplatte. Besonders vorteilhaft ist es, das Anlenk- und das Koppelmittel als Ausnehmungen zu realisieren. Die beiden Ausnehmungen sind dann nicht allein durch den Ausleger miteinander verbunden, der die gesamte Kraftübertragung gewährleisten muss, sondern zusätzlich über das Verbindungsteil. Somit können auch hohe Schaltkräfte sicher übertragen werden, wenn der Ausleger beispielsweise ein Kunststoff ist und das Verbindungsteil aus Stahlblech besteht. Das Verbindungsteil kann ebenso wie die Schaltmasse in dem Ausleger vergossen sein bzw. von diesem vollständig oder teilweise umschlossen werden.

Die Lösung der Aufgabe sieht eine Hybridschwungmasse vor, die aus zwei verschiedenen Werkstoffen aufgebaut ist, wobei der Ausleger aus einem verhältnismäßig leichten Werkstoff gebildet ist und die Schaltmasse und/oder die kraftübertragenden Bauteile aus einem anderen zweiten Material bestehen. Mittels der Formgebung des zweiten Materials, insbesondere des Verbindungsteils, kann die Eigenfrequenz des Systems verändert werden.

In einer Ausgestaltung der Erfindung ist vorgesehen, dass die Form und der Werkstoff des Auslegers und der Schaltmasse so gewählt werden, dass die Eigenfrequenz der auf der Schaltwelle verbauten Schwungmasse außerhalb der möglichen Drehzahlen der Eingangswelle des Getriebes liegt, für das die Anordnung vorgesehen ist. Die Eigenfrequenz der Schwungmasse kann von ihrer Anbindung an die Umgebungskonstruktion abhängen und ist daher im allgemeinen getriebeindividuell. Die Ausgestaltung macht sich die Tatsache zu Nutze, dass häufig störende Schwingungen nicht über das gesamte Drehzahlband auftreten, sondern nur bei bestimmten Drehzahlen, die Eigenfrequenzen oder Oberwellen des Systems darstellen. Durch Verschieben der Eigenfrequenz der Schaltvorrichtung infolge einer externen Anregung so, dass die Resonanzamplituden zumindest in dem Frequenzbereich, der für den Betrieb der Schaltvorrichtung typisch ist, vermindert werden. Idealerweise wird dadurch nicht nur das sich infolge externer Anregungen ergebende Frequenzspektrum geglättet, sondern zusätzlich die Resonanzfrequenz in einen Bereich verschoben, der unterhalb der Leerlaufdrehzahl einer für das Zahnräderwechselgetriebe vorgesehenen Brennkraftmaschine liegt, so dass nur während des Startvorgangs die Eigenfrequenz des Systems kurz durchlaufen wird. Alternativ wird die Eigenfrequenz in einen Bereich gelegt, der oberhalb zulässiger Getriebedrehzahlen liegt und daher nie erreicht wird.

Die erfindungsgemäß bei gleichem Trägheitsmoment leichtere Schwungmasse weist in der Regel eine höhere Eigenfrequenz auf, was das Verschieben der Eigenfrequenz durch Gestaltung des Auslegers in höhere Frequenzbereiche, in denen Resonanzen weniger leicht wahrgenommen werden, erleichtert.

Die Schwungmasse kann auch so gestaltet werden, dass nur eine Teilverschiebung der Resonanzfrequenz. Die Verschiebung kann in Bereiche erfolgen, die nur unter seltenen Betriebsbedingungen erreicht werden. Ebenfalls ist denkbar, eine Erhöhung der Resonanzamplitude in bestimmten Frequenzbereichen zu vorzusehen, wenn die Resonanzspitzen in anderen Frequenzbereichen dafür deutlich gesenkt werden können.

Besonders vorteilhaft ist es, nicht nur eine Frequenzverschiebung der Eigenfrequenz zu bewirken, sondern auch eingeleitete Schwingungen zu dämpfen.

Durch die Erfindung kann weiterhin der Aufbau der Schaltvorrichtung vereinfacht werden. Im Stand der Technik sind Schwungmassen in der Regel gleitgelagert und weisen ein möglichst kleines Betriebsspiel auf, um den Schaltkomfort beeinträchtigende Schwingungen möglichst nicht entstehen zu lassen. Durch das geringe Betriebsspiel ist eine Relativverschiebung der Schaltstange zur Schwungmasse, wie es für das Wählen einer Schaltgasse wünschenswert ist, aber erschwert, so dass das Wählen schwergängig erscheint. Die Erfindung ermöglicht daher eine Vergrößerung des Betriebsspiels und somit eine leichtere Verschiebbarkeit der Schwungmasse zur Schaltstange, so dass die Wählbewegung ohne weitere Maßnahmen komfortabler wird. Die so vermehrt auftretenden Schwingungen werden durch die Tilgermasse kompensiert. Konstruktiv aufwändigere Lösungen oder der Einsatz eines Wälzlagers werden damit vermieden.

Die Schwungmasse ist über ihr Koppelmittel mit einer Schaltwelle drehfest koppelbar. Bei dem Koppelmittel kann es sich um eine Durchgangsausnehmung handeln, mit der die Schwungmasse direkt oder indirekt mit der Schaltwelle in Verbindung steht. So kann das Koppelmittel als Lagerauge den Außenring eines Gleit- oder Wälzlagers bilden. Alternativ ist im Lagerauge ein Adapter eingesetzt. Eine nicht-kreisförmige Form des Lagerauges, beispielsweise ein Innenmehrkant, erlaubt eine formschlüssige, drehfeste Verbindung. Eine drehfeste Verbindung kann auch über eine Verzahnung der Lageraugenwand erfolgen.

Auch andere Gestaltungen des Koppelmittels, beispielsweise als Sackloch oder als Nase, die stirnseitig in ein Sackloch einer Schaltwelle eingreifen kann sind denkbar.

Beim Verdrehen der Schaltwelle verschwenkt auch die Schwungmasse. In der Regel verschwenkt diese um das Koppelmittel, das dann auf der Achse, um die verschwenkt wird, angeordnet ist.

Der Ausleger ist ein im Wesentlichen radial gerichteter Abschnitt der Schwungmasse, der sowohl das Koppelmittel als auch die Schaltmasse aufnimmt. Vorzugsweise ist die Schaltmasse im radial am weitesten auskragenden Abschnitt des Auslegers angeordnet, um ein hohes Trägheitsmoment zu erzeugen.

Die Schaltmasse kann am Ausleger form-, kraft- oder stoffschlüssig gesichert sein. Vorzugsweise ist sie in den Ausleger derart eingebettet, dass dieser die Schaltmasse vollständig umgibt. Dazu kann die Schaltmasse mit Kunststoff umspritzt sein.

Durch die Form der Schaltmasse wird die Eigenfrequenz der Schwungmasse beeinflusst. Im einfachsten Fall ist die Schaltmasse ein konvexer Körper. Ausdrücklich eingeschlossen sind aber auch mehrere oder komplexer geformte Schaltmassen in dem Ausleger.

In einer Ausbildung der Erfindung ist der Ausleger als ein Winkelbauteil ausgebildet. Er weist vorzugsweise einen radial gerichteten Abschnitt und einen in Umfangsrichtung der Schaltwelle gerichteten Abschnitt auf, in dem die Schaltmasse angeordnet ist. Ein derartiger winkelförmiger Ausleger ist Bauraum und Masse sparend und weist ein hohes Trägheitsmoment auf. Die Veränderung der Eigenfrequenz kann allerdings Formen bedingen, mit denen ein Massezuwachs verbunden ist.

Der Ausleger weist vorzugweise Ausnehmungen auf, die die Eigenfrequenz verändern und/oder die Masse des Auslegers verringern. Die Ausnehmungen können vereinzelt angeordnet sein, oder sie sind lediglich von Rippen oder Stegen getrennt, die den Ausleger stabilisieren. Einfache Profilierungen sind ebenso denkbar wie komplexere Netzkonstruktionen. Zur weiteren Stabilisierung insbesondere eines Auslegers aus Kunststoff kann ein außen liegender, zumindest teilweise umlaufender Kragen beitragen. Die Höhe des Kragens kann veränderlich sein.

In einer weiteren Ausbildung weist die Schwungmasse ein Anlenkmittel auf, über das die Schaltwelle verdrehbar ist. Das Anlenkmittel ist beispielsweise ein Kugelkopf, der mit einem Seilzug koppelbar ist. In einer anderen Variante ist das Anlenkmittel als eine Aussparung ausgebildet, in die ein Zapfen eingreifen kann. Die Aussparung ist vorzugsweise als eine Durchgangsaussparung ausgebildet, in die ein Zylinder formschlüssig eingreift.

### Kurze Beschreibung der Zeichnungen

Im folgenden wird ein Ausführungsbeispiel der Erfindung anhand von Zeichnungen näher erläutert. Es zeigen:
- Figur 1: eine erfindungsgemäße Schwungmasse in einer perspektivischen Ansicht,
- Figur 2: die Schwungmasse aus Figur 1 im Längsschnitt,
- Figur 3: die Schwungmasse nach Figur 2, geschnitten nach II-II und
- Figur 4: das Verbindungsteil der Schwungmasse nach Figur 3.

### Ausführliche Beschreibung der Zeichnungen

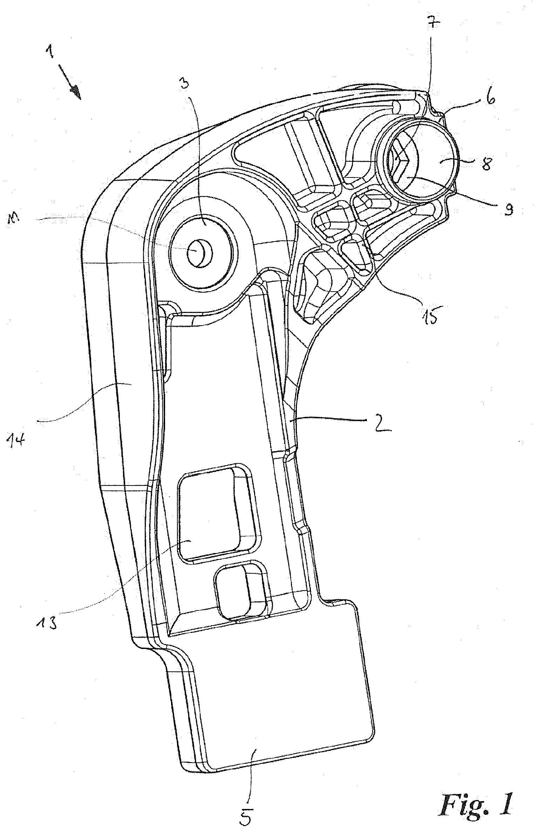

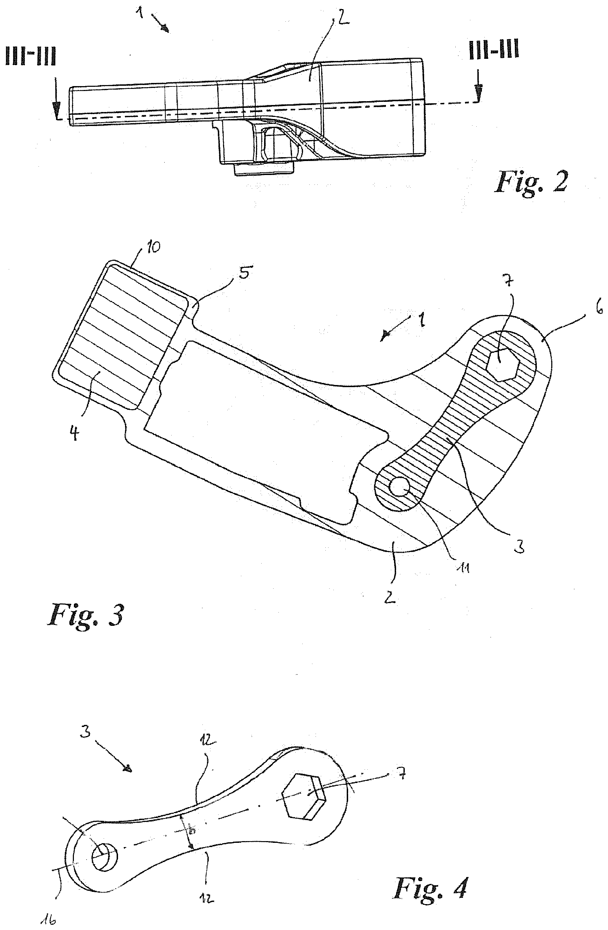

Die Figuren 1 bis 3 zeigen eine Schwungmasse 1 für eine nicht dargestellte Schaltwelle eines Kraftfahrzeugzahnräderwechselgetriebes Wie aus Figur 3 ersichtlich ist, ist die Schwungmasse 1 aus drei miteinander fest verbundenen Einzelteilen aufgebaut: Sie weist einen Ausleger 2, ein Verbindungsteil 3 und eine Schaltmasse 4 auf, wobei die genannten Einzelteile 2, 3, 4 aus jeweils unterschiedlichen Werkstoffen bestehen.

Die Schwungmasse 1 weist eine winkelförmige Grundform mit zwei Schenkeln auf, an deren einem Schenkelende 5 die Schaltmasse 4 und an deren anderem Schenkelende 6 ein Koppelmittel 7 angeordnet ist. Das Koppelmittel 7 wird durch eine Freistanzung in Form eines regelmäßigen Sechsecks in dem Verbindungsteil 3 gebildet (Figur 4). Zur besseren Führung der Schaltwelle bilden ein Teil des Verbindungsteils 3, das die Freistanzung einschließt, als ein Boden 9 und eine daran anschließende Hülse 8 einen kreiszylindrischen Topf. Durch die nicht kreisförmige Freistanzung kann die Schwungmasse 1 mit der Schaltwelle formschlüssig und verdrehsicher positioniert werden. Eine nicht dargestellte, unregelmäßig geformte Freistanzung könnte zusätzlich nur genau eine Montageposition zulassen, so dass Fehlmontagen ausgeschlossen werden.

Die Hülse 8 ist integraler Teil des Auslegers 2, der als dreidimensional geformtes Bauteil in Leichtbauweise aus einem dämpfenden Kunststoff hergestellt ist. Zusammen mit dem Boden 9 bildet die Hülse 8 ein Lagerauge für die Schaltwelle, um das die Schwungmasse 1 beim Einlegen (Schalten) eines Ganges verschwenkbar ist.

Der winkelförmige Ausleger 2 ist ein Kunststoffspritzteil. An seinem vom Koppelmittel 7 abwandten Schenkelende 5 weist er einer Schaltmasse 4 auf, die durch den Kunststoff gekapselt ist. Die Schaltmasse 4 besteht aus einem schweren Material wie Eisen. Er ist von einer vergleichsweise dünnen Kunststoffhülle 10 umgeben, so dass die Form des Schenkelendes 5 im Wesentlichen durch die Form der Schaltmasse 4 bestimmt ist.

Mittig weist der Ausleger 2 ein Anlenkmittel 11 auf, über das die Schwungmasse 1 und infolgedessen die drehfest mit ihr koppelbare Schaltwelle verschwenkt werden können. Das Anlenkmittel 11 ist als Durchgangsausnehmung in Form einer Bohrung ausgebildet, in die ein vom Schaltgestänge bewegter, nicht dargestellter stiftartiger Zapfen eingreifen kann, über den die Schwungmasse 1 angelenkt wird. Das Anlenkmittel 11 und das als Freistanzung ausgebildete Koppelmittel 7 sind beide auf einer Blechplatte angeordnet, die als Verbindungsteil 3 die eingeleitete Schaltkraft sicher auf die Schaltwelle übertragen kann. Auf einen separaten Schalthebel für die Schaltwelle kann so verzichtet werden, da das in den Ausleger 2 eingeschlossene Verbindungsteil 3 den Hebelarm bildet. Zur Minimierung der Masse der Blechplatte weist diese im Bereich zwischen den Ausnehmungen 7, 11 seitliche Einschnürungen 12 auf, die auch die Eigenfrequenz beeinflussen. Die Blechplatte ist hier relativ dünnwandig; das Verbindungsteil 3 kann auch als ein massives Bauteil vorzugsweise aus Metall ausgebildet sein oder aus gedoppelten Blechplatten (jeweils nicht dargestellt) aufgebaut sein. Vorliegend ist das Verbindungsteil 3 zungenförmig mit zwei endseitigen Verdickungen ausgebildet, so dass die Breite b des Blechs, senkrecht zur Achse 15 Anlenkmittel-Koppelmittel gesehen, abzüglich der Ausnehmungen in etwa konstant bleibt.

Der dreidimensionale gestaltete Ausleger 2 weist Ausnehmungen 13 auf. Die Ausnehmungen 13 sind teilweise als Durchgangsausnehmungen, teilweise Sacklöcher ausgebildet. Einige sind vereinzelt angeordnet, während andere ein Netz bilden, so dass sie durch eine Stegstruktur 15 voneinander getrennt sind. Durch Art und Größe aller Ausnehmungen 13 kann die Eigenfrequenz ebenfalls gezielt beeinflusst werden.

Zur Masseoptimierung ist der Schenkelarm 5, über den die Schaltmasse 4 angebunden ist, relativ dünnwandig ausgebildet. Zur Verstärkung des Auslegers 2 weist dieser daher einen versteifenden Kragen 14 auf, der an der längeren Seite des Auslegers 2 angeordnet ist.

### Liste der Bezugszahlen

- 1: Schwungmasse
- 2: Ausleger
- 3: Verbindungsteil
- 4: Schaltmasse
- 5: Schenkel
- 6: Schenkel
- 7: Koppelmittel
- 8: Hülse
- 9: Boden
- 10: Hülle
- 11: Anlenkmittel
- 12: Einschnürung
- 13: Ausnehmung
- 14: Kragen
- 15: Achse

## Patentansprüche

1. Schwungmasse (1) eines Kraftfahrzeugwechselgetriebes, aufweisend
- ein Koppelmittel (7) zur Anbindung der Schwungmasse (1) an eine Schaltwelle und
- einen Ausleger (2) mit einer Schaltmasse (4), welche am radial auskragenden Ende (5) des Auslegers (2) angeordnet ist,
**dadurch gekennzeichnet, dass** die Schwungmasse (1) ein Anlenkmittel (11) zum Verschwenken der Schaltwelle aufweist, wobei das Anlenkmittel (11) und das Koppelmittel (7) durch ein Verbindungsbauteil (3) verbunden sind und das Verbindungsteil (3) aus einem anderen Werkstoff ausgebildet ist als der Ausleger (2).

2. Schwungmasse nach Anspruch 1, **dadurch gekennzeichnet, dass** das Verbindungsbauteil (3) als eine Blechplatte ausgebildet ist.

3. Schwungmasse nach Anspruch 1 oder 2, **dadurch gekennzeichnet, dass** das Verbindungsteil (3) senkrecht zu der zwischen dem Koppelmittel (7) und dem Anlenkmittel (11) gebildeten Achse eine Einschnürung (12) aufweist.

4. Schwungmasse nach Anspruch 1 bis 3, **dadurch gekennzeichnet, dass** das Verbindungsteil (3) kunststoffumspritzt ist.

5. Schwungmasse nach einem der Ansprüche 1 bis 4, **dadurch gekennzeichnet, dass** das Anlenkmittel (11) als ein Kugelkopf oder als eine Durchgangsausnehmung, in die ein Zapfen eingreifen kann, ausgebildet ist.

6. Schwungmasse nach einem der vorhergehenden Ansprüche, **dadurch gekennzeichnet, dass** der Ausleger (2) ein Winkelbauteil ist.

7. Schwungmasse nach einem der vorhergehenden Ansprüche, **dadurch gekennzeichnet, dass** der Ausleger (2) Ausnehmungen (13) zur Masseverminderung aufweist.

8. Schwungmasse nach einem der vorhergehenden Ansprüche, **dadurch gekennzeichnet, dass** der Ausleger (2) aus Kunststoff oder Aluminium besteht.

9. Schwungmasse nach einem der vorhergehenden Ansprüche, **dadurch gekennzeichnet, dass** der Ausleger (2) einen axial abgewinkelten Kragen (14) aufweist.

10. Schaltvorrichtung, die eine Schaltwelle und eine auf der Schaltwelle angeordnete Schwungmasse (1) nach einem der vorhergehenden Ansprüche aufweist, **dadurch gekennzeichnet, dass** die Eigenfrequenz der Schwungmasse (1) außerhalb der über eine Motorwelle auf die Schaltvorrichtung einbringbaren Frequenzbands der Leerlaufdrehzahl bis zur Maximaldrehzahl liegt.

## Claims

1. Centrifugal mass (1) of a motor vehicle change-speed gearbox, having
- a coupling means (7) for attaching the centrifugal mass (1) to a selector shaft, and
- a cantilever (2) having a shift mass (4) which is arranged on the radially projecting end (5) of the cantilever (2),
**characterized in that** the centrifugal mass (1) has an articulation means (11) for pivoting the selector shaft, wherein the articulation means (11) and the coupling means (7) are connected by a connecting component (3), and the connecting part (3) is formed from a different material than the cantilever (2).

2. Centrifugal mass according to Claim 1, **characterized in that** the connecting component (3) takes the form of a sheet metal plate.

3. Centrifugal mass according to Claim 1 or 2, **characterized in that** the connecting part (3) has a constriction (12) perpendicular to the axis formed between the coupling means (7) and the articulation means (11).

4. Centrifugal mass according to Claims 1 to 3, **characterized in that** the connecting part (3) is encapsulated in plastic.

5. Centrifugal mass according to one of Claims 1 to 4, **characterized in that** the articulation means (11) is formed as a ball head or as a through-aperture in which a peg can engage.

6. Centrifugal mass according to one of the preceding claims, **characterized in that** the cantilever (2) is an angled component.

7. Centrifugal mass according to one of the preceding claims, **characterized in that** the cantilever (2) has apertures (13) for weight reduction.

8. Centrifugal mass according to one of the preceding claims, **characterized in that** the cantilever (2) is made of plastic or aluminium.

9. Centrifugal mass according to one of the preceding claims, **characterized in that** the cantilever (2) has an axially angled-off collar (14).

10. Shift device which has a selector shaft and a centrifugal mass (1) according to one of the preceding claims which is arranged on the selector shaft, **characterized in that** the natural frequency of the centrifugal mass (1) lies outside of the frequency band, which can be introduced via an engine shaft to the shift device, of the idle rotational speed up to the maximum rotational speed.

## Revendications

1. Masse oscillante (1) d'une boîte de vitesses d'un véhicule automobile, présentant :
- un moyen d'accouplement (7) pour relier la masse oscillante (1) à un arbre de commande et
- un bras (2) avec une masse de changement de vitesses (4) qui est disposée à l'extrémité (5) du bras (2) faisant saillie radialement,
**caractérisée en ce que** la masse oscillante (1) présente un moyen d'articulation (11) pour faire pivoter l'arbre de commande, le moyen d'articulation (11) et le moyen d'accouplement (7) étant reliés par un composant de liaison (3) et la pièce de liaison (3) étant réalisée en un matériau différent de celui du bras (2).

2. Masse oscillante selon la revendication 1, **caractérisée en ce que** le composant de liaison (3) est réalisé sous forme de plaque de tôle.

3. Masse oscillante selon la revendication 1 ou 2, **caractérisée en ce que** la pièce de liaison (3) présente un rétrécissement (12) perpendiculairement à l'axe formé entre le moyen d'accouplement (7) et le moyen d'articulation (11) .

4. Masse oscillante selon les revendications 1 à 3, **caractérisée en ce que** la pièce de liaison (3) présente un surmoulage en plastique.

5. Masse oscillante selon l'une quelconque des revendications 1 à 4, **caractérisée en ce que** le moyen d'articulation (11) est réalisé sous la forme d'une tête sphérique ou sous la forme d'un évidement de passage dans lequel peut s'engager un tourillon.

6. Masse oscillante selon l'une quelconque des revendications précédentes, **caractérisée en ce que** le bras (2) est un composant coudé.

7. Masse oscillante selon l'une quelconque des revendications précédentes, **caractérisée en ce que** le bras (2) présente des évidements (13) pour réduire le poids.

8. Masse oscillante selon l'une quelconque des revendications précédentes, **caractérisée en ce que** le bras (2) se compose de plastique ou d'aluminium.

9. Masse oscillante selon l'une quelconque des revendications précédentes, **caractérisée en ce que** le bras (2) présente un col coudé axialement (14).

10. Dispositif de changement de vitesses qui présente un arbre de commande et une masse oscillante (1) disposée sur l'arbre de commande selon l'une quelconque des revendications précédentes, **caractérisé en ce que** la fréquence propre de la masse oscillante (1) est située à l'extérieur des bandes de fréquences entre le régime de marche à vide et le régime maximal, pouvant être introduites par le biais d'un arbre de moteur sur le dispositif de changement de vitesses.
